# EUROPÄISCHE PATENTSCHRIFT

(11) **EP 0 860 041 B1**
(45) Veröffentlichungstag und Bekanntmachung des Hinweises auf die Patenterteilung: **22.09.1999**
(21) Anmeldenummer: 96937287.9
(22) Anmeldetag: 30.10.1996
(51) Int. Cl.: H01S 3/094, H01S 3/042, H01S 3/06, H01S 3/07, H01S 3/23

(54) **LASERVERSTÄRKERSYSTEM**
LASER AMPLIFIER SYSTEM
SYSTEME D'AMPLIFICATION LASER

(30) Priorität: 03.11.1995 DE 19541020
(43) Veröffentlichungstag der Anmeldung: 26.08.1998
(73) Patentinhaber: DaimlerChrysler AG, 70567 Stuttgart (DE); Micro Systems Design Dr. Altmann GmbH, 80639 München (DE); Altmann, Konrad, Dr., 80639 München (DE)
(72) Erfinder: ALTMANN, Konrad, D-80639 München (DE); HALLDORSSON, Thorsteinn, D-81925 München (DE)
(86) Internationale Anmeldenummer: EP9604704
(87) Internationale Veröffentlichungsnummer: WO9717747

(56) Entgegenhaltungen:
- EP-A- 0 310 241
- EP-A- 0 632 551
- US-A- 5 097 477
- US-A- 5 131 002
- US-A- 5 148 441
- US-A- 5 237 584

## Beschreibung

Die Erfindung betrifft ein Laserverstärkersystem mit einem oder mehreren in einem Strahlungsfeld angeordneten Festkörpern aus laseraktiven Materialien, die durch Pumplichtquellen optisch gepumpt werden, wobei als Pumplichtquellen bevorzugt Laserdioden dienen.

Derartige Laserverstärkersysteme, die meist durch Einbringen in einen optischen Resonator als Laser ausgebildet sind, entsprechen in unterschiedlichen Ausführungsformen dem Stand der Technik. Dabei wird versucht, den gestellten Anforderungen, nämlich gute Überlappung zwischen Pump- und Laserstrahl, effiziente Kühlung des laseraktiven Materials und hohe Strahlqualität mit Hilfe unterschiedlicher Anordnungen gerecht zu werden. Meist wird jedoch die für ein derartiges System wesentliche, gleichzeitige Optimierung aller Systemeigenschaften nicht erreicht. So ist z. B. aus den US Patenten 4,785,459 und 4,837,771 ein Laser bekannt, bei dem der Strahl zickzackförmig zwischen den Begrenzungsflächen eines Kristallblocks hin- und herreflektiert wird, wobei jeweils an den Auftreffstellen des Strahls Laserdiodenarrays angeordnet sind, durch die das Material optisch gepumpt wird. Dadurch wird zwar eine gute Überlappung von Pump- und Laserstrahl erreicht, eine optimale Kühlung der gepumpten Stellen jedoch beeinträchtigt.

Weiter ist aus der Europäischen Patentanmeldung 0 632 551 A1 ein Laserverstärkersystem bekannt, bei dem der Pumpstrahl mehrmals auf den Mittelpunkt eines Plättchens aus laseraktivem Material gelenkt wird, das relativ zum Durchmesser eine geringe Dicke besitzt, um eine möglichst rasche Ableitung der entstehenden Wärme zu gewährleisten und dadurch die Temperatur des Plättchens niedrig zu halten. Letzteres wird auf diese Weise jedoch nur in eingeschränktem Umfang erreicht, da bei dieser Anordnung die gesamte Pumpleistung in einem sehr kleinen Volumenbereich absorbiert wird, der entsprechend dem Produkt aus Fläche des Fokalflecks und Dicke des Plättchens typischerweise eine Größe von 0.1 mm³ bis 0.5 mm³ hat.

Der vorliegenden Erfindung liegt die Aufgabe zugrunde, die erwähnten Probleme zu vermeiden und ein Laserverstärkungssytem der eingangs beschriebenen Art zu schaffen, bei dem die oben beschriebenen Systemeigenschaften gleichzeitig optimiert werden, das außerdem eine kompakte Bauweise erlaubt und so gestaltet ist, daß es sich für eine kostengünstige Massenproduktion eignet.

Diese Aufgabe wird durch die in Anspruch 1 angegebenen Merkmale gelöst. In den Unteransprüchen sind vorteilhafte Ausgestaltungen und Weiterbildungen angegeben.

In der nachfolgenden Beschreibung wird die Erfindung anhand von Ausführungsbeispielen erläutert. Die Figuren ergänzen diese Erläuterungen. Es zeigt:
- Fig. 1.: ein Schemabild eines Ausführungsbeispiels eines Laserverstärkersystems nach den Ansprüchen 1, 2 und 16,
- Fig. 2.: ein Schemabild eines Ausführungsbeispiels eines Laserverstärkersystems nach den Ansprüchen 1, 2 und 17,
- Fig. 3.: ein Schemabild eines Ausführungsbeispiels eines Laserverstärkersystems nach den Ansprüchen 1,2 und 10,
- Fig. 4.: ein Schemabild eines Ausführungsbeispiels eines Laserverstärkersystems nach den Ansprüchen 1, 2 und 11.
- Fig. 5: eine Anordnung, bei der zwei entsprechend Fig. 1 ausgebildete Laserverstärkersysteme gekoppelt sind.
- Fig. 6: eine Anordnung, bei der sechs entsprechend Fig. 1 ausgebildete Laserverstärkersysteme gekoppelt sind, wobei nur das erste als Laser ausgebildet ist, während die übrigen den aus letzterem austretenden Strahl verstärken.

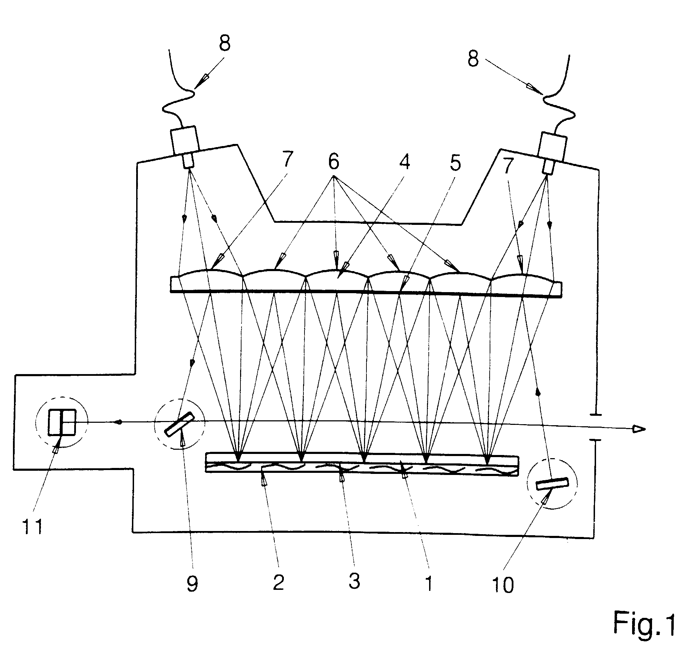

Der Grundgedanke der Erfindung wird im folgenden anhand des in Fig. 1 skizzierten Ausführungsbeispiels erläutert. Eine planparallele Platte 1 aus laseraktivem Material, das z. B. für den Betrieb eines 3 - oder eines 4 - Niveau Lasers geeignet ist, und je nach Dotierung und Wärmeleitungskoeffizient etwa 0.1 bis 1 mm dick, 1 bis 5 mm breit und 5 bis 20 mm lang ist, wird an der Unterseite durch ein strömendes Medium 2 gekühlt. Die Platte ist an der Unterseite 3 sowohl für die Laserstrahlung als auch für die Pumpstrahlung hochreflektierend an der Oberseite dagegen für beide Strahlungsarten antireflektierend beschichtet. In einem Abstand von etwa 1 -30 mm über dieser Platte befindet sich ein optisches Element 4 aus einem Material, das für die Pumpstrahlung transparent ist und einen Brechungsindex besitzt, der größer als derjenige des umgebenden Mediums (in vorliegendem Beispiel Luft) ist. Die untere Begrenzungsfläche 5 dieses Elements ist eben und so beschichtet, daß sie für für die Pumpstrahlung hochtransparent ist, während die obere Begrenzungsfläche aus nebeneinander in Serie angeordneten astigmatisch-sphärischen Flächen 6 besteht. Von diesen Flächen sind die äußerste rechte 7 und die äußerste linke 7 hochtransparent die übrigen dagegen hochreflektierend für die Pumpstrahlung. Die astigmatisch-sphärischen Flächen 7 bilden somit mit der Fläche 5 zwei Linsen. Durch diese werden die aus den Wellenleitern 8 austretenden Pumpstrahlen auf die Platte 1 fokussiert, wobei der Mittelstrahl mit der Platte 1 einen Winkel bildet, der etwa dem halben Öffnungswinkel des aus dem Wellenleiter austretenden Strahls entspricht. Sodann werden die Pumpstrahlen an der Unterseite 3 der Platte 1 reflektiert und auf die von rechts bzw. von links am nächsten gelegenen sphärischen Flächen 6 gelenkt. Diese wirken als Hohlspiegel und fokussieren die Pumpstrahlen erneut auf von rechts und links weiter innen gelegene Stellen der Platte, deren Abstand von den beiden ersten Fokalbereichen durch den Auftreffwinkel und den Abstand der Flächen 3 und 5 festgelegt ist. Von dort werden die Pumpstrahlen erneut gegen weiter innen gelegene Flächen 6 gelenkt und so fort. Auf diese Weise werden die Pumpstrahlen zickzackförmig zwischen den Hohlspiegeln 6 und der Fläche 3 hin- und herreflektiert, wobei der Pumpstrahl nach und nach in der Platte 1 absorbiert wird, deren Dicke so gewählt ist, daß diese Absorption nur in den Fokalbereichen der Pumpstrahlung erfolgt. Um den Laserstrahl durch diese Fokalbereiche zu lenken, wird dieser ebenfalls zickzackförmig hin- und herreflektiert, jedoch zwischen den Flächen 3 und 5. Um letzteres zu erreichen ist die Fläche 5 im Bereich der Auftreffstellen des Laserstrahls für letzeren hochreflektierend beschichtet. In den Bereichen, welche den Fokalbereichen der Pumpstrahlung gegenüberliegen, ist die Fläche 5 jedoch für die Laserstrahlung durchlässig, um ein Anschwingen parasitärer Moden zu vermeiden.

Falls die numerische Apertur NA und somit auch der Öffnungswinkel der aus den Wellenleitern austretenden Pumpstrahlen groß ist und sich infolgedessen ein unzweckmäßig flacher Zickzackverlauf des Lasermodes ergeben würde, wird vorgeschlagen, den Bereich zwischen der Platte 1 und der Fläche 5 durch einen Block aufzufüllen, der aus demselben Material wie die Platte besteht, das jedoch undotiert und somit nicht laseraktiv ist. Dadurch wird erreicht, daß die NA des Pumpstrahls in dem besagten Bereich nach der Abbe'schen Sinusbedingung um einen Faktor verringert wird, der dem Brechungsindex des Materials entspricht. Bei Nd:YAG kann dadurch zum Beispiel der Öffnungswinkel des Pumpstrahls um einen Faktor 1,82 verkleinert werden, was einen wesentlich steileren Verlauf des Zickzackmodes möglich macht. Durch diese Maßnahme wird außerdem erreicht, daß der Aufbau monolithisch und somit gegenüber Dejustierungen wesentlich unempfindlicher ist.

Eine Weiterbildung des eben beschriebenen Laserverstärkersystems besteht darin, daß dieses durch Hinzufügen der Resonatorendspiegel 9 und 10 zu einem Laser vervollständigt wird.

Eine zusätzliche Weiterbildung des Systems besteht darin, daß zum Zweck der Frequenzverdopplung oder Verdreifachung ein oder mehrere nichtlineare optische Elemente 11 oder oder andere optische Funktionslelemente in den Strahlengang eingebracht werden.

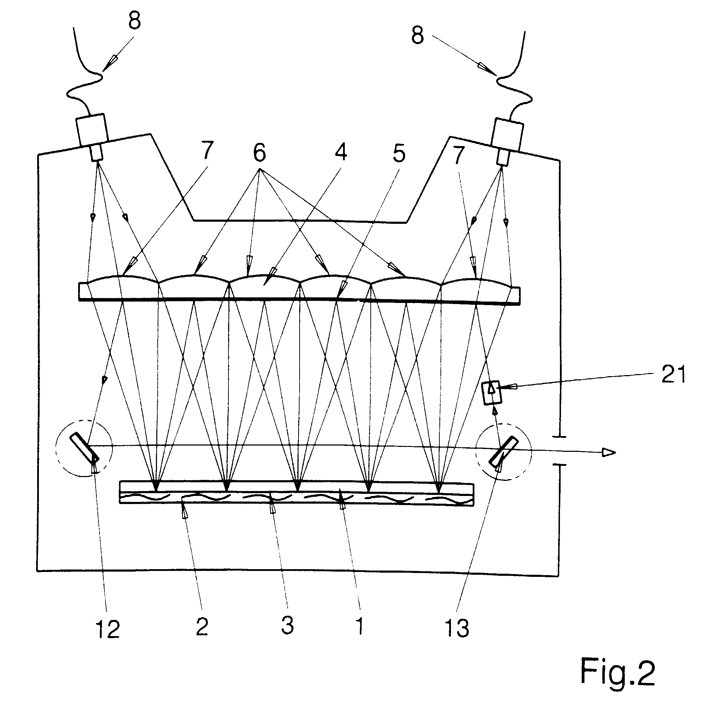

Fig. 2. zeigt das Schemabild eines Ausführungsbeispiels, bei dem das Laserverstärkersystem durch Spiegel 12 und 13 so ergänzt wird, daß ein Ringresonator entsteht. Vorteil dieser Anordnung ist, daß das bei einem Resonator mit Endspiegeln auftretende sog. "spatial hole-burning" vermieden wird. Das Element 21 stellt eine optische Diode dar.

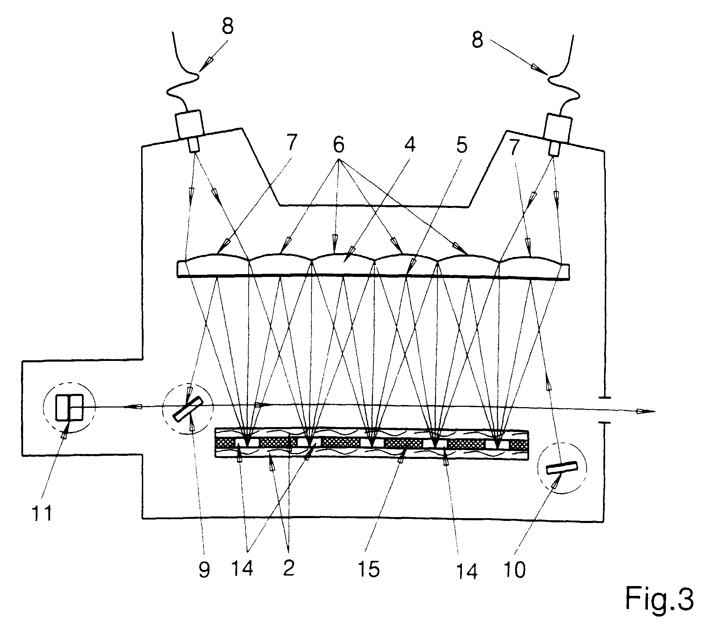

Fig. 3. zeigt das Schemabild eines Ausführungsbeispiels, bei dem die Platte 1 in einzelne kleine Plättchen 14 aufgeteilt ist, die durch eine Trägerplatte 15 gehalten werden. Letztere wird bevorzugt aus einem Material mit hoher Wärmeleitfähigkeit erstellt, um auch die seitlichen Flächen der Plättchen zu kühlen. Vorteil dieser Anordnung ist, daß eine geringere Menge des teueren laseraktiven Materials benötigt wird. Außerdem kann bei der Herstelllung der kleinen Plättchen eine größere optische Homogenität garantiert werden.

Als zusätzliche Weiterbildung wird vorgeschlagen, das laseraktive Material abhängig von dessen Wärmeleitfähigkeit auch an der Oberseite zu kühlen, wie dies in Fig. 3. dargestellt ist.

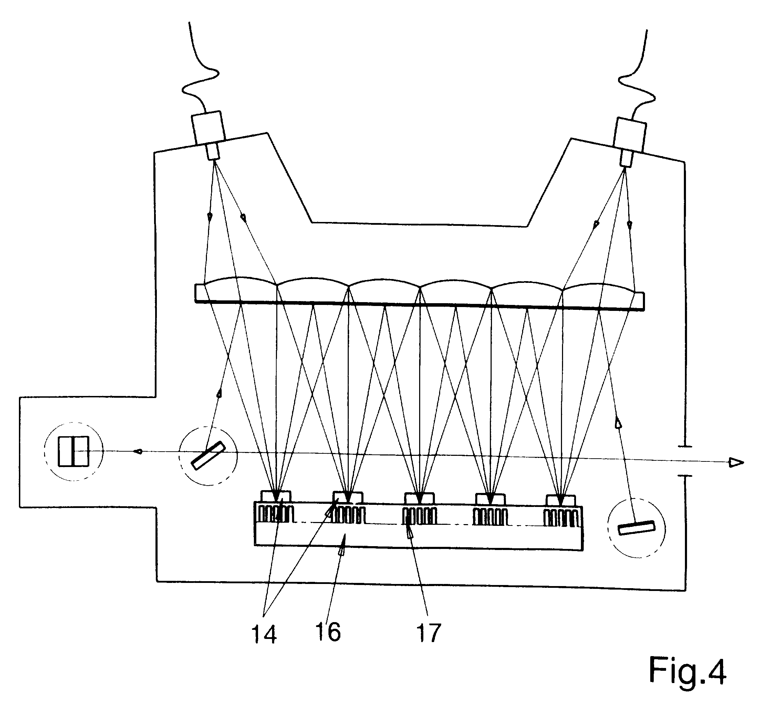

Weiter wird vorgeschlagen, abhängig von den Materialeigenschaften das System dahingehend zu vereinfachen, daß auf die direkte Flüssigkeitskühlung des laseraktiven Materials verzichtet wird. Fig. 4. zeigt das Schemabild eines Ausführungsbeispiels, bei dem die Plättchen 14 an der Unterseite in wärmeleitenden Kontakt mit einer Trägerplatte 16 gebracht sind, die von Kühlkanälen 17 durchzogen ist.

Durch die erfindungsgemäße Anordnung wird einerseits erreicht, daß das laseraktive Material dünn gehalten werden kann und die Wärmeableitung unmittelbar an den Absorptionsstellen des Pumpstrahls nahezu über die gesamte Oberfläche der Platte 1 bzw. der Plättchen 14 erfolgen kann. Gleichzeitig wird vermieden, daß die Absorption der gesamten Pumpleistung in einem zusammenhängenden Volumenbereich erfolgt, der deshalb schwer zu kühlen ist, wie dies bei herkömmlichen frontal gepumpten Lasersystemen der Fall ist. Letzteres gilt auch für die bereits erwähnte Europäische Patentanmeldung 0 632 551 A1, wenn auch hier die Absorption in einem sehr kleinen Volumenbereich erfolgt. Praktisch wird bei der erfindungsgemäßen Anordnung der Temperaturgradient und damit auch die Temperatur in den Plättchen gegenüber der 0 632 551 A1 um einen Faktor gesenkt, welcher der Anzahl der durchstrahlten Fokalbereiche entspricht. Dies ist inbesondere im Falle von 3-Niveau oder Quasi-3-Niveau Lasern von entscheidender Bedeutung für die Effizienz der Leistungsumwandlung, da hier das untere Laserniveau thermisch besetzt ist. Außerdem läßt sich die Anordnung der Reflexionsspiegel in einer Reihe technisch leichter realisieren und justieren als deren räumliche Anordnung, wie sie z. B.in Fig. 28 der Schrift 0 632 551 A1 benutzt wird. Auf die thermische Linsenwirkung des laseraktiven Materials wird bewußt nicht verzichtet, wie dies im Hauptanspruch und in der Beschreibung Absatz 3 der Schrift 0 632 551 A1 ausdrücklich durch die Forderung geschieht, daß sich das Laserstrahlungsfeld nahezu parallel zum Temperaturgradienten ausbreiten soll. Im Gegenteil, es ist vorgesehen, die in der Platte 1 bzw. den Plättchen 14 durch die Pumpstrahlung, die thermische Dispersion des Brechungskoeffizienten und die thermische Verformung induzierte thermische Linse und deren fokussierende Wirkung auf den Laserstrahl und dessen Durchmesser so anzupassen, daß innerhalb der Fokalbereiche eine optimale Überlappung zwischen dem Pump- und dem Laserstrahl bzw. dem transversalen Grundmode des Resonators erreicht wird. Diese Anpassung wird durch die Wahl der Dicke und des Absorptionskoeffizienten der Platte bzw. der Plättchen erreicht, was bei der vorliegenden Anordnung eine sehr feine Abstimmung ermöglicht. Die Benutzung der thermischen Linsenwirkung hat den Vorteil, daß die Flächen 3 und 5, zwischen denen der Laserstrahl hin- und herreflektiert wird, exakt eben ausgebildet werden können, wodurch der Justieraufwand erheblich reduziert wird. Sollte für gewisse Lasermaterialien die fokussierende Wirkung der thermischen Linsen nicht ausreichen, so wird vorgeschlagen diese durch die Benutzung gewölbter anstatt ebener Resonatorspiegel 9 und 10 bzw. 12 und 13 zu verstärken. Sollte eine weitere Bündelung des Laserstrahls notwendig sein, so wird vorgeschlagen, die Reflexionsflächen 3 und 5 im Bereich der Auftreffstellen des Laserstrahls in geeigneter Weise zu wölben, um auf diese Weise eine zusätzliche fokussierende Wirkung auf den Laserstrahl auszuüben.

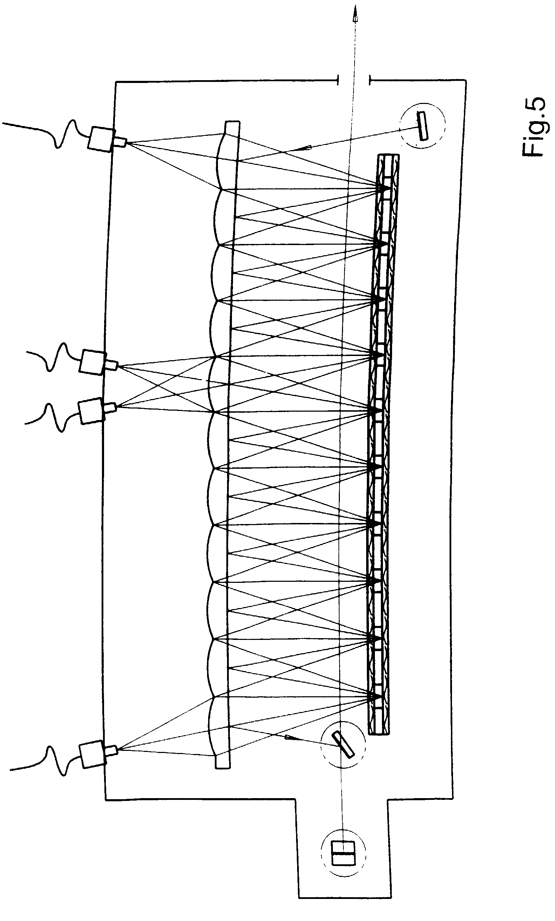

Fig. 5 zeigt eine Anordnung, bei der zwei entsprechend Fig. 1 ausgebildete Laserverstärkersysteme zu einem Laser mit Frequenzverdopplung zusammengekoppelt sind. Das System ist in der Lage, mit Hilfe derzeit zur Verfügung stehenden Laserdioden etwa 40 bis 50 Watt Ausgangsleistung zu liefern.

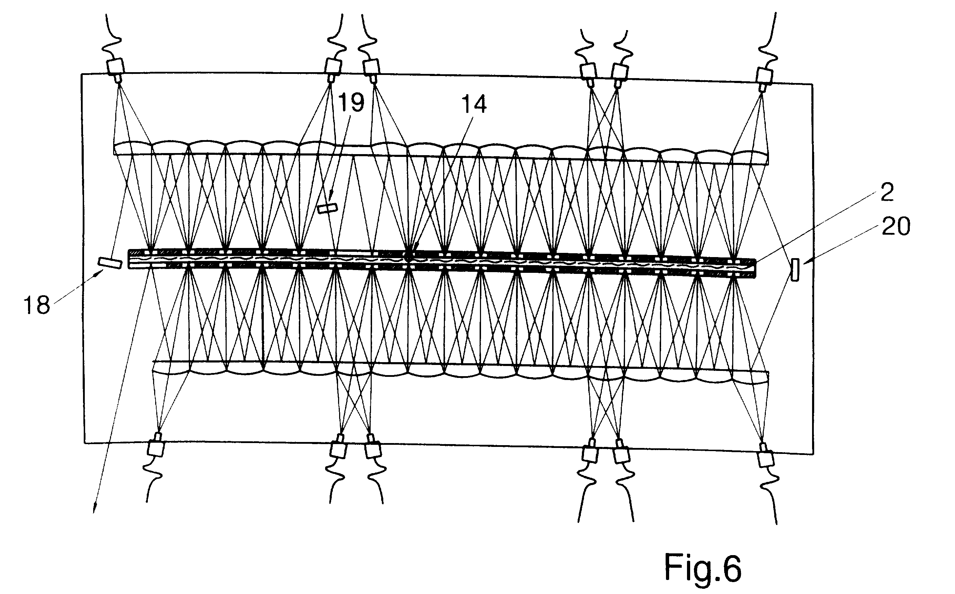

Fig. 6 zeigt eine Anordnung, bei der sechs der oben beschriebenen Systeme gekoppelt sind. Von diesen ist das System links oben mit Hilfe der Spiegel 18 und 19 als Laser ausgebildet, die übrigen arbeiten als Laserverstärker, indem sie den durch den Spiegel 19 ausgekoppelten Strahl verstärken. Dies hat den Vorteil, daß sich der Justieraufwand der Anordnung reduziert, da der Strahl nicht die gesamte Anordnung mehrfach durchläuft wie bei einer Resonatoranordnung. Die Führung des aus dem als Laser arbeitenden Teilsystem austretenden Strahls erfolgt in den Festkörperlementen 14 durch die induzierten thermischen Linsen und durch den Strahlführungseffekt durch Verstärkung (gain guiding effect). Auf diese Weise arbeiten die nachgeschalteten Verstärkersysteme ähnlich wie gefaltete Linsenwellenleiter, mit den bekannten strahlführenden Eigenschaften. Die Zahl der nachgeschalteten Verstärkersysteme ist also praktisch nicht begrenzt. Durch die in Fig. 6. gewählte spiegelbildliche Anordnung der Verstärkersysteme wird eine gemeinsame Kühlung 2 der laseraktiven Festkörper ermöglicht. Die oberen und die unteren Verstärkersysteme sind durch den Umlenkspiegel 20 aneinander gekoppelt. Alternativ wird vorgeschlagen die Ankopplung mit Hilfe eines Wellenleiters durchzuführen. Letzteres empfiehlt sich, wenn mehrere Einheiten von zusammengefaßten Subsystemen aneinandergekoppelt werden. Es wird erwartet, daß mit einer derartigen Anordnung 60 - 90 % der Diodenleistung in Laserleistung umgewandelt werden können. Bei einer Ankopplung von 100 Dioden sollte also im Grundmodebetrieb eme Ausgangsleistung von 1 kW möglich sein, wobei eine derartige Anordnung ohne die Diodenlaser in einem Volumen von 10 bis 20 cm³ untergebracht werden könnte.

## Patentansprüche

1. Laserverstärkersystem mit laseraktivem Festkörpermaterial, das durch Pumplichtquellen gepumpt wird, **dadurch gekennzeichnet, daß** einer oder mehrere Pumpstrahlen mit Hilfe von Spiegeln (6) oder anderen optischen Hilfsmitteln (7) so geführt werden, daß jeder einzelne Pumpstrahl mehrmals auf unterschiedliche Stellen des Festkörpermaterials fokussiert wird, wobei letzteres in Form eines zusammenhängenden (1) oder getrennter (14) Festkörper vorliegt, die so gestaltet sind, daß der Pumpstrahl in den Fokalbereichen und nur in diesen absorbiert wird, wodurch letztere optisch gepumpt werden, und daß der Laserstrahl so umgelenkt und geführt wird, daß er all diese Fokalbereiche durchstrahlt und auf diese Weise verstärkt wird.

2. Laserverstärkersystem nach Anspruch 1, **dadurch gekennzeichnet, daß** jeder der Pumpstrahlen durch Hohlspiegel (6) oder Linsen (7), deren optische Achsen in einer Ebene nebeneinander angeordnet sind, auf eine senkrecht zu deren Achsen angeordete reflektierende Fläche (3) fokussiert wird, wobei der Auftreffwinkel so gewählt wird, daß der Pumpstrahl zickzackförmig zwischen den Hohlspiegeln und besagter Fläche hin- und herreflektiert wird und durch das in den Fokalbereichen befindliche laseraktive Material absorbiert wird.

3. Laserverstärkersystem nach Anspruch 2, **dadurch gekennzeichnet, daß** eine der Begrenzungsflächen des laseraktiven Materials mit der reflektierenden Fläche (3) zusammenfällt.

4. Laserverstärkersystem nach Anspruch 1, 2 oder 3, **dadurch gekennzeichnet, daß** der Laserstrahl zwischen zwei parallel angeordneten reflektierenden Flächen (3, 5) zickzackförmig hin- und herreflektiert wird.

5. Laserverstärkersystem nach Anspruch 4, **dadurch gekennzeichnet, daß** eine der Reflexionsflächen für den Laserstrahl mit der Reflexionsfläche (3) für die Pumpstrahlen identisch ist.

6. Laserverstärkersystem nach Anspruch 4 und 5, **dadurch gekennzeichnet, daß** sich die zweite Reflexionsfläche (5) für den Laserstrahl zwischen der ersten Reflexionsfläche (3) und den fokussierenden Elementen (6) befindet und daß diese zweite Reflexionsfläche für das Pumplicht hochtransparent ist.

7. Laserverstärkersystem nach Ansprüchen 4 oder 5 und 6, **dadurch gekennzeichnet, daß** die Hohlspiegel (6) und die Reflexionsfläche (5) in ein optisches Bauelement (4) integriert sind, indem sie Begrenzungsflächen dieses Elements bilden.

8. Laserverstärkersystem nach einem oder mehreren der Ansprüche 2 bis 7, **dadurch gekennzeichnet, daß** die aus den Fasern (8) austretende Pumpstrahlung durch Linsen (7) auf die Fläche (3) fokussiert wird, diese durchstrahlt und dann durch die Hohlspiegel (6) mehrmals auf die Fläche (3) zurückfokussiert wird.

9. Laserverstärkersystem nach einem oder mehreren der vorangehenden Ansprüche, **dadurch gekennzeichnet, daß** die Festkörper aus unterschiedlichen Materialien bestehen.

10. Laserverstärkersystem nach einem oder mehreren der vorangehenden Ansprüche, **dadurch gekennzeichnet, daß** die einzelnen Festkörper als Plättchen (14) in oder auf einer gemeinsamen Trägerplatte (16) positioniert sind.

11. Laserverstärkersystem nach einem oder mehreren der vorangehenden Ansprüche, **dadurch gekennzeichnet, daß** die Plättchen oder Festkörper aus dotiertem laseraktivem Material an einen Block aus undotiertem Lasermaterial angesprengt werden, welcher sich zwischen diesen und den fokussierenden Elementen (6, 7) befindet.

12. Laserverstärkersystem nach einem oder mehreren der vorangehenden Ansprüche, **dadurch gekennzeichnet, daß** der oder die Festkörper an einer oder mehreren Begrenzungsflächen durch ein strömendes Medium (2) gekühlt werden oder daß die Kühlung durch Kontakt zu einem anderen Festkörper (16) mit hoher Wärmeleitfähigkeit erfolgt.

13. Laserverstärkersystem nach Anspruch 12, **dadurch gekennzeichnet, daß** die Fokalbereiche des Pumplichts unmittelbar an die gekühlten Begrenzungsflächen angrenzen.

14. Laserverstärkersystem nach einem oder mehreren der vorangehenden Ansprüche, **dadurch gekennzeichnet, daß** die einzelnen Festkörper unterschiedlich dick oder unterschiedlich dotiert sind, mit dem Zweck, daß letztere unabhängig von der Reihenfolge, mit der sie von dem Pumpstrahl durchstrahlt werden, einen gleich großen Anteil der Pumpstrahlung absorbieren.

15. Laserverstärkersystem nach einem oder mehreren der vorangehenden Ansprüche, **dadurch gekennzeichnet, daß** die Reflexionsfläche (5) für den Laserstrahl letzteren nur in den Bereichen reflektiert, welche dessen Auftreffstellen unmittelbar umgeben und daß insbesondere die Bereiche, welche den Fokalbereichen bzgl. der Reflexionsfläche (5) senkrecht gegenüberliegen für den Laserstrahl transparent sind oder diesen absorbieren, um ein Anschwingen von parasitären Moden zu verhindern.

16. Laserverstärkersystem nach einem oder mehreren der vorangehenden Ansprüche, **dadurch gekennzeichnet, daß** die thermischen Linsen, welche in den Bereichen entstehen, auf die das Pumplicht fokussiert wird, so bemessen werden, daß sie für eine Strahlführung geeignet sind, was durch die Wahl der Dicke des Festkörpermaterials, der Intensität des ankommenden Pumplichts, des Absorptionskoeffizienten für das Pumplicht, oder durch entsprechende Gestaltung der Kühlanordnung geschieht.

17. Laserverstärkersystem nach einem oder mehreren der vorangehenden Ansprüche, **dadurch gekennzeichnet, daß** dieses durch Endspiegel (9, 10) so ergänzt wird, daß ein optischer Resonator entsteht.

18. Laserverstärkersystem nach einem oder mehreren der Ansprüche 1 bis 15, **dadurch gekennzeichnet, daß** dieses durch Spiegel (12, 13) so ergänzt wird, daß ein Ringresonator entsteht.

19. Laserverstärkersystem nach einem oder mehreren der vorangehenden Ansprüche, **dadurch gekennzeichnet, daß** die entstehenden thermischen Linsen so bemessen werden, daß nur der transversale Grundmode des Resonators anschwingt.

20. Laserverstärkersystem nach einem oder mehreren der vorangehenden Ansprüche, **dadurch gekennzeichnet, daß** in den Strahlengang ein Material (11) zur Frequenzverdopplung oder Verdreifachung eingebracht wird.

21. Laserverstärkersystem nach einem oder mehreren der vorangehenden Ansprüche, **dadurch gekennzeichnet, daß** die Zuführung des Pumplichts über Glasfasern (8) erfolgt.

22. Laserverstärkersystem nach einem oder mehreren der vorangehenden Ansprüche, **dadurch gekennzeichnet, daß** mehrere Systeme mit Hilfe von Spiegeln oder anderen Hilfsmitteln optisch zusammengeschaltet werden.

23. Laserverstärkersystem nach Anspruch 17 oder 18 und 22, **dadurch gekennzeichnet, daß** nur eines der zusammengeschalteten Verstärkersysteme als Laser ausgebildet ist, währen die übrigen den aus diesem Laser austretenden Strahl verstärken.

## Claims

1. A laser intensification system having a lasing solid-state material which is pumped by pumped light sources, **characterized in that** any one or several pumped beams are guided by means of mirrors (6) or other optical aids (7) in such a way that each individual pumped beam is focused several times on different points of the solid-state material, the latter being present in the form of a continuous solid body (1) or of separate solid bodies (14), which are designed so that the pumped beam is absorbed within the focal regions and only in these, as a result of which the latter are optically pumped, and that the laser beam is deflected and guided in such a way that it passes through all these focal regions and is intensified in this way.

2. A laser intensification system according to Claim 1, **characterized in that** each of the pumped beams is focused by means of concave reflectors (6) or lenses (7), whose optical axes are arranged side-by-side in a plane, onto a reflecting surface (3) arranged perpendicularly to their axes, the incident angle being selected so that the pumped beam is reflected back and forth in a zigzag shape between the concave reflectors and the aforesaid surface and is absorbed by the lasing material located within the focal regions.

3. A laser intensification system according to Claim 2, **characterized in that** one of the boundary surfaces of the lasing material coincides with the reflecting surface (3).

4. A laser intensification system according to Claim 1, 2 or 3, **characterized in that** the laser beam is reflected back and forth in a zig-zag shape between two reflecting surfaces (3, 5) arranged in parallel.

5. A laser intensification system according to Claim 4, **characterized in that** one of the reflection surfaces for the laser beam is identical with the reflection surface (3) for the pumped beams.

6. A laser intensification system according to Claim 4 and 5, **characterized in that** the second reflection surface (5) for the laser beam is situated between the first reflection surface (3) and the focusing elements (6) and that this second reflection surface is highly transparent to the pumped light.

7. A laser intensification system according to Claims 4 or 5 and 6, **characterized in that** the concave reflectors (6) and the reflection surface (5) are integrated into an optical structural element (4) in that they form boundary surfaces of this element.

8. A laser intensification system according to any one or several of claims 2 to 7, **characterized in that** the pumped radiation emerging from the fibers (8) is focused by lenses (7) onto the surface (3), passes through this surface (3) and is then focused back onto the surface (3) several times by means of the concave reflectors (6).

9. A laser intensification system according to any one or several of the preceding claims, **characterized in that** the solid bodies consist of different materials.

10. A laser intensification system according to any one or several of the preceding claims, **characterized in that** the individual solid bodies are positioned as small plates (14) in or on a common carrier plate (16).

11. A laser intensification system according to any one or several of the preceding claims, **characterized in that** the small plates or solid bodies made of a doped lasing material are wrung on to a block made of undoped laser material and situated between them and the focusing elements (6, 7).

12. A laser intensification system according to any one or several of the preceding claims, **characterized in that** the solid body or bodies is/are cooled by a flowing medium (2) on any one or several boundary surfaces, or in that the cooling takes place by contact with another solid body (16) of high thermal conductivity.

13. A laser intensification system according to Claim 12, **characterized in that** the focal regions of the pumped light directly adjoin the cooled boundary surfaces.

14. A laser intensification system according to any one or several of the preceding claims, **characterized in that** the individual solid bodies have different thicknesses or are doped differently, with the purpose that, independently of the sequence in which the pumped beam passes through them, they absorb an identical portion of the pumped radiation.

15. A laser intensification system according to any one or several of the preceding claims, **characterized in that** the reflection surface (5) for the laser beam reflects the latter only within the regions directly surrounding its points of incidence, and in that particularly the regions situated perpendicularly opposite the focal regions with respect to the reflection surface (5) are transparent to the laser beam or absorb it to prevent lasing of parasitic modes.

16. A laser intensification system according to any one or several of the preceding claims, **characterized in that** the thermal lenses arising within the regions onto which the pumped light is focused are dimensioned in such a way that they are suitable for beam guiding, which occurs as a result of the choice of solid-state material thickness, intensity of the incoming pumped light, coefficient of absorption for the pumped light, or as a result of appropriate design of the cooling arrangement.

17. A laser intensification system according to any one or several of the preceding claims, **characterized in that** it is supplemented by end reflectors (9, 10) in such a way that an optical resonator is created.

18. A laser intensification system according to any one or several of claims 1 to 15, **characterized in that** it is supplemented by reflectors ( 12, 13) in such a way that a ring resonator is created.

19. A laser intensification system according to any one or several of the preceding claims, **characterized in that** the thermal lenses created are dimensioned in such a way that only the transverse fundamental mode of the resonator lases.

20. A laser intensification system according to any one or several of the preceding claims, **characterized in that** a material (11) for frequency doubling or tripling is introduced into the path of the beam.

21. A laser intensification system according to any one or several of the preceding claims, **characterized in that** the pumped light is delivered via glass fibres (8).

22. A laser intensification system according to any one or several of the preceding claims, **characterized in that** several systems are optically connected by means of reflectors or other aids.

23. A laser intensification system according to claim 17 or 18 and 22, **characterized in that** only one of the connected intensification systems is designed as a laser while the others intensify the beam emerging from this laser.

## Revendications

1. Système d'amplification à laser comprenant un corps solide à activité laser pompé par des sources lumineuses de pompage,
caractérisé en ce qu'
un ou plusieurs faisceaux de pompage sont guidés à l'aide de miroirs (6) ou d'autres accessoires optiques (7) pour que chaque faisceau de pompage distinct soit focalisé plusieurs fois sur des endroits différents du corps solide,
ce dernier se présentant sous la forme d'un corps solide cohérent (1) ou de corps séparés (14) réalisés pour que le faisceau de pompage soit absorbé dans les zones focales et uniquement dans celles-ci, pour le pompage optique de ces zones, et,
le faisceau laser est dévié et guidé pour passer dans toutes les zones focales et être ainsi amplifié.

2. Système d'amplification à laser selon la revendication 1,
caractérisé en ce que
chaque faisceau de pompage est focalisé par des miroirs concaves (6) ou des lentilles (7) dont les axes optiques sont juxtaposés dans un plan, vers une surface réfléchissante (3) disposée perpendiculairement à leur axe,
l'angle d'incidence étant choisi pour que le faisceau de pompage soit réfléchi alternativement suivant un tracé en zig-zag entre les miroirs concaves et la surface réfléchissante, et soit absorbé par la matière à activité laser qui se trouve dans les zones focales.

3. Système d'amplification à laser selon la revendication 2,
caractérisé en ce que
l'une des surfaces limites de la matière à activité laser correspond à la surface réfléchissante (3).

4. Système d'amplification à laser selon la revendication 1, 2, 3,
caractérisé en ce que
le faisceau laser est réfléchi alternativement suivant un tracé en zig-zag entre deux surfaces réfléchissantes (3, 5) parallèles.

5. Système d'amplification à laser selon la revendication 4,
caractérisé en ce que
l'une des surfaces réfléchissantes pour le faisceau laser est identique à la surface de réflexion (3) pour les faisceaux de pompage.

6. Système d'amplification à laser selon les revendications 4 et 5,
caractérisé en ce que
la seconde surface de réflexion (5) pour le faisceau laser se trouve entre la première surface de réflexion (3) et les éléments de focalisation (6), et cette seconde surface de réflexion est très transparente pour la lumière de pompage.

7. Système d'amplification à laser selon les revendications 4, 5, 6,
caractérisé en ce que
les miroirs concaves (6) et la surface de réflexion (5) sont intégrés dans un composant optique (4) dont ils forment les surfaces limites.

8. Système d'amplification à laser selon l'une ou plusieurs des revendications 2 à 7,
caractérisé en ce que
le faisceau de pompage sortant des fibres (8) est focalisé par des lentilles (7) sur la surface (3), traverse cette surface, puis est focalisé en retour plusieurs fois sur la surface (3) par les miroirs concaves (6).

9. Système d'amplification à laser selon l'une ou plusieurs des revendications précédentes,
caractérisé en ce que
les corps solides sont en différentes matières.

10. Système d'amplification à laser selon l'une ou plusieurs des revendications précédentes,
caractérisé en ce que
les différents corps solides sont des plaquettes (14) placées dans ou sur une plaque de support (16) commune.

11. Système d'amplification à laser selon l'une ou plusieurs des revendications précédentes,
caractérisé en ce que
les plaquettes ou les corps solides en une matière dopée à activité laser sont fixés sur un bloc de matière laser non dopée qui se trouve entre ceux-ci et les éléments de focalisation (6, 7).

12. Système d'amplification à laser selon l'une ou plusieurs des revendications précédentes,
caractérisé en ce que
l'une ou plusieurs des surfaces limites du ou des corps solides sont refroidies par un fluide (2), ou encore le refroidissement se fait par contact avec un autre corps solide (16) à forte conductibilité thermique.

13. Système d'amplification à laser selon la revendication 12,
caractérisé en ce que
les plages focales de la lumière de pompage sont directement adjacentes aux surfaces limites refroidies.

14. Système d'amplification à laser selon l'une ou plusieurs des revendications précédentes,
caractérisé en ce que
les différents corps solides ont des épaisseurs différentes ou un dopage différent pour absorber la même fraction du faisceau de pompage indépendamment de l'ordre dans lequel ces corps solides sont traversés par le faisceau de pompage.

15. Système d'amplification à laser selon l'une ou plusieurs des revendications précédentes,
caractérisé en ce que
la surface de réflexion (5) pour le faisceau laser réfléchit celui-ci uniquement dans les zones qui entourent directement le point d'impact, et en ce que notamment les zones qui sont opposées perpendiculairement aux zones focales ou à la surface de réflexion (5), sont transparentes pour le faisceau laser ou absorbent celui-ci pour éviter les oscillations de modes parasites.

16. Système d'amplification à laser selon l'une ou plusieurs des revendications précédentes,
caractérisé en ce que
les lentilles thermiques formées dans les zones dans lesquelles est focalisée la lumière de pompage, sont dimensionnées pour permettre de guider le faisceau par le choix de l'épaisseur de la matière du corps solide, de l'intensité de la lumière de pompage d'entrée, des coefficients d'absorption pour la lumière de pompage, ou par une mise en forme appropriée du dispositif de refroidissement.

17. Système d'amplification à laser selon l'une ou plusieurs des revendications précédentes,
caractérisé en ce qu'
il est complété par des miroirs d'extrémité (9, 10) formant un résonateur optique.

18. Système d'amplification à laser selon l'une ou plusieurs des revendications précédentes,
caractérisé en ce qu'
il est complété par des miroirs (12, 13) pour former un résonateur en anneau.

19. Système d'amplification à laser selon l'une ou plusieurs des revendications précédentes,
caractérisé en ce que
les lentilles thermiques sont dimensionnées pour osciller seulement sur le mode de base transversal du résonateur.

20. Système d'amplification à laser selon l'une ou plusieurs des revendications précédentes,
caractérisé par
un matériau (11) prévu dans le chemin du faisceau pour doubler la fréquence ou tripler la fréquence.

21. Système d'amplification à laser selon l'une ou plusieurs des revendications précédentes,
caractérisé en ce que
l'alimentation en lumière de pompage se fait par des fibres de verre (8).

22. Système d'amplification à laser selon l'une ou plusieurs des revendications précédentes,
caractérisé en ce que
plusieurs systèmes sont combinés optiquement à l'aide de miroirs ou d'autres accessoires.

23. Système d'amplification à laser selon les revendications 17 ou 18 et 22,
caractérisé en ce que
l'un seulement des systèmes amplificateurs regroupés forme un laser alors que les autres amplifient le faisceau émis par ce laser.
